# EUROPEAN PATENT APPLICATION

(11) **EP 2 818 049 A1**
(43) Date of publication of application: **31.12.2014**
(21) Application number: 13382242.9
(22) Date of filing: 26.06.2013
(51) Int. Cl.: A22B 5/16, A22B 5/00

(54) **Device for removing skin from the legs of slaughtered animals**

(71) Applicant: Nova Mevir, S.L., 08700 Igualada (ES)
(72) Inventor: Llombart Vives, Joan, 08700 Igualada (ES)
(74) Representative: Manresa Val, Manuel

(57) **Abstract**

Device for removing the skin from legs of slaughtered animals.

It comprises a first gearing (11), formed by two conical toothed wheels (2, 4) with helicoidal toothed of variable modulus that comprises at least one drive means (3) and because it comprises a second gearing (12), formed by two conical toothed wheels (14, 15) with helicoidal toothed of variable modulus and because said gearings (11, 12) are inclined to each other forming an angle (α) between them of 20° to 40°, with said angle (α) resulting from the projection of imaginary axes (x, x') that would pass between the toothed wheels (2, 4, 14, 15) until they intersect.

## Description

Device for removing skin from the legs of slaughtered animals, of the type comprising a first gearing, formed by two conical toothed wheels with helicoidal toothed of variable modulus that comprises at least one drive means and because it comprises a second gearing, formed by two conical toothed wheels with helicoidal toothed of variable modulus and because said gearings are inclined to each other forming an angle α between them of 20 to 40°, with said angle α resulting from the projection of imaginary axes x and x' that pass between the toothed wheels until they intersect.

### BACKGROUND OF THE INVENTION

Various patents and utility models are known in the state of the art that refer to animal skinning machines and devices.

Thus, European Patent EP0313824, "Device for removing the skin from a poultry carcass", is known from 1988 and within the public domain, in the name of NORDISCHER MASCHINENBAU RUD. BAADER GMBH & CO KG, which describes an apparatus for skinning poultry carcasses, particularly the breast portions thereof is described, from which the wings have been removed. It is the task to suggest a unit integratable into a processing line, which is able to remove the skin in one piece. To achieve this aim the skinning tool has a pair of cone-shaped, meshing and rotating toothed rollers, which can be moved apart mutually and reciprocally counter to spring tension without losing their engagement. By means of a sensor and as a function of the size of the particular poultry carcass, the complete unit is brought into its working position.

The United States Patent US5186680 "Poultry deskinning apparatus", from 1991, in the name of Ms Norma CONAWAY, which refers to a chicken deskinning device provided with a pair of rollers whereby one may be pivoted with respect to the other for defining a gap there between. The rollers terminate in a pair of blocks, each of which has an open end to allow the passage of chicken skin past the rear of the roller bearing blocks. A second set of rollers may be employed beneath the first set.

Also belonging to the state of the art is the United States Patent US4459721 "Poultry skinning machine", from 1983, within the public domain, in the name of Mr William HILL, which refers to a poultry skinning machine for removing the skin from poultry parts utilizes rollers having inter-engaging helical teeth that laterally transport the poultry parts while removing the skin from the product. The rollers act in cooperation with a cover means having a shearing section disposed in a substantially bearing relationship along at least a portion of the rollers adjacent their ends. The shearing section facilitates separating the product from detaching skin whereby roller clogging is avoided by directing skin through a receiving gap formed between end bearing means.

Lastly, reference is also made to Spanish Patent ES2129327 "Dispositivo para la retirada de la piel de las patas de animales sacrificados", from 1996, currently in the public domain, in the name of MEVIR, S.A., which refers to a device for removing the skin from legs of slaughtered animals, which comprises a gearing formed by two toothed wheels, with one of them associated with drive means and performing the removal of skin because said skin is pinched between the two toothed wheels. It is **characterised in that** the toothed wheels are conical with helicoidal toothed of variable modulus. Elastic means are interposed between axes of the cited toothed wheels, which allow a slight displacement of one of the wheels with respect to the other. Water is not required to cool the bearings because they are sufficiently large to make cooling unnecessary and also need less maintenance. The device involves significantly lower manufacturing costs than the known devices because it has a single gearing.

### BRIEF DISCLOSURE OF THE INVENTION

This application is included within the machines that skin animals for subsequent consumption.

The closest document is the previously mentioned Spanish Patent ES2129327.

Said patent was an advance for its time because it avoids the need to use water to cool the device and because the same gearing pinched and released the skin.

The drawback of said invention is that it meant skinning one leg of the animal at a time, so that the task became arduous and, if two devices were installed in parallel, the actual animal shape impeded operativity.

Thus, the inventor has developed a new device in which two legs can be skinned at the same time because the gearings have been inclined and the optimum angle for carrying out said operation has been calculated being between 20° and 40°.

In this way, it is possible to skin two legs at a time from animals such as rabbits and hares.

One object of this invention is a device for removing the skin from legs of slaughtered animals, of the type comprising a first gearing, formed by two conical toothed wheels with helicoidal toothed of variable modulus that comprises at least one drive means **characterised in that** it comprises a second gearing, formed by two conical toothed wheels with helicoidal toothed of variable modulus and because said gearings are inclined to each other forming an angle α between them of 20 to 40°, with said angle α resulting from the projection of imaginary axes x and x' that pass between the toothed wheels until they intersect.

### BRIEF DESCRIPTION OF THE DRAWINGS

In order to facilitate the description, this report is accompanied by three sheets of drawings that represent a practical embodiment case, which is provided for purposes of illustration and not limit the scope of the present invention.
- Figure 1 is a plan view of the object covered by this invention,
- Figure 2 is a plan view with a transversal section of Figure 1, and
- Figure 3 is a partial view of the device operating without protectors.

### SPECIFIC EXEMPLARY EMBODIMENT OF THIS INVENTION

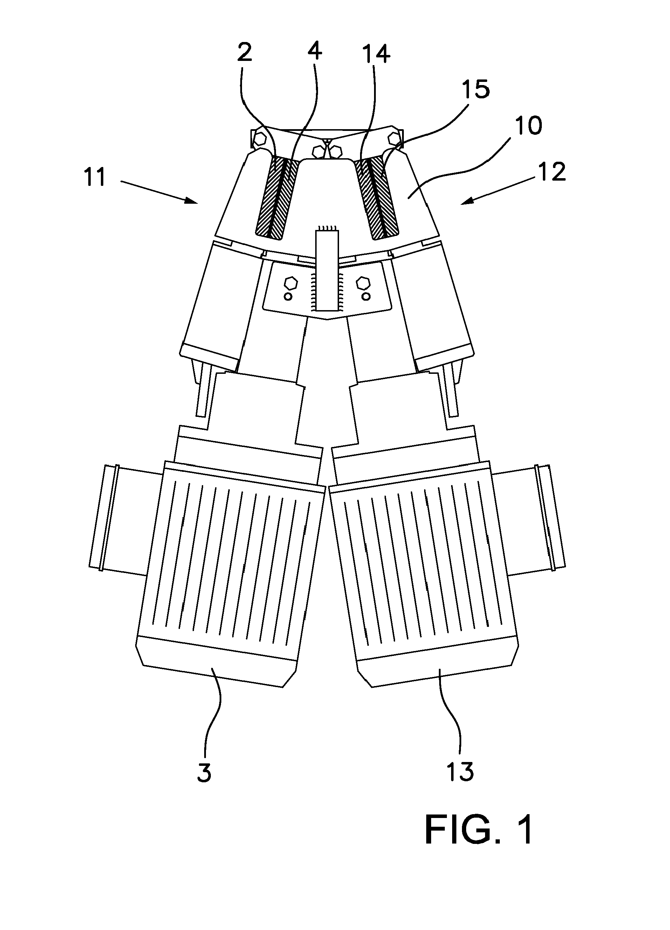

Thus, Figure 1 illustrates first gearing 11, with its toothed wheels 2, 4 and drive means 3, a second gearing with its toothed wheels 14, 15 and drive means 13 and protector 10.

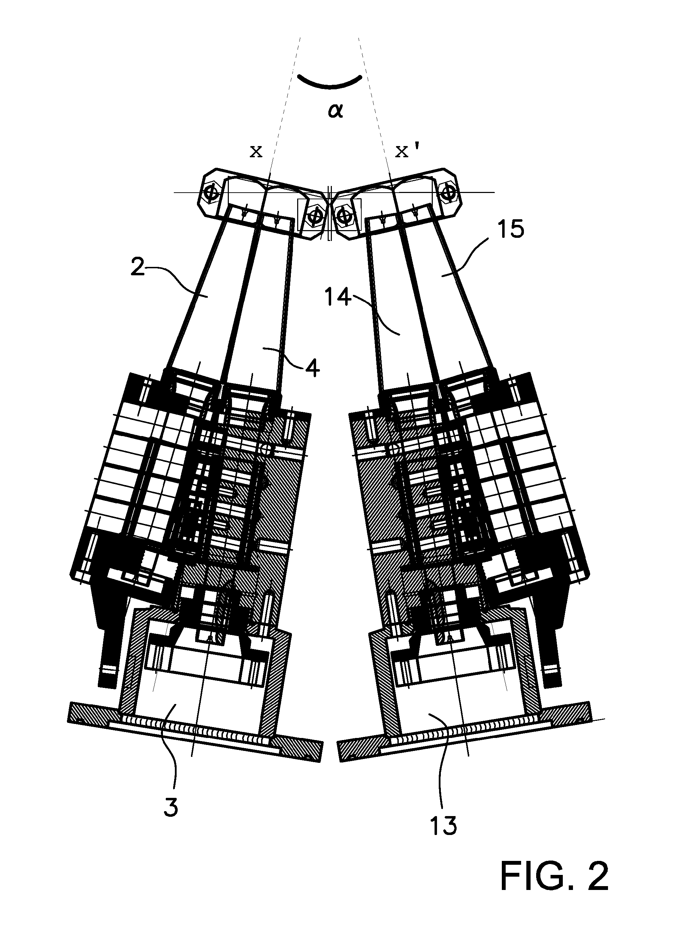

Figure 2 shows the toothed wheels 2, 4, 14, 15, the drive means 3, 13, axes x, x', which define an angle α.

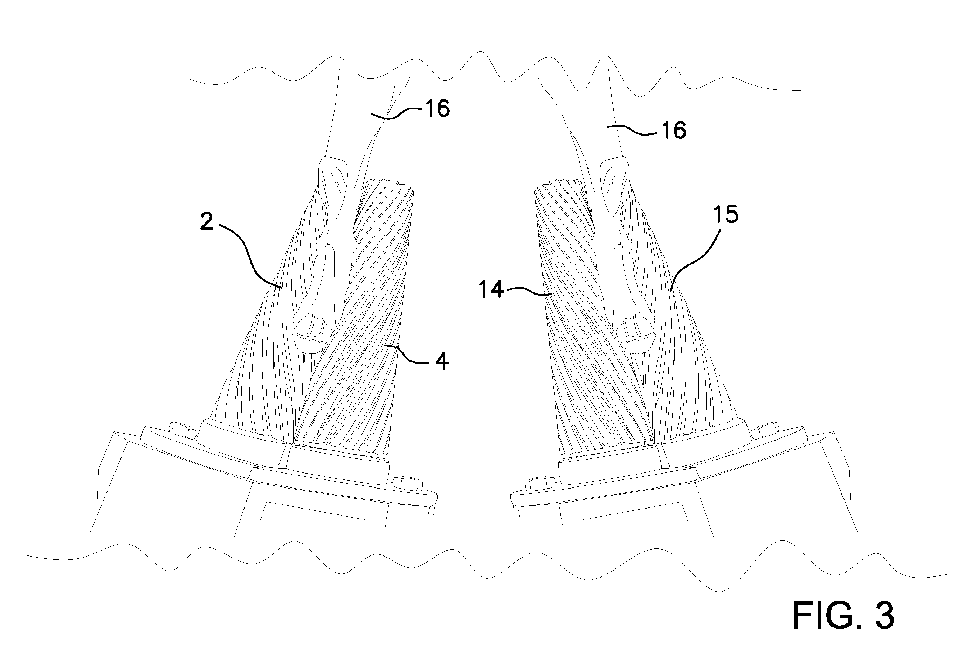

Lastly, Figure 3 illustrates toothed wheels 2, 4, 14, 15 and the legs 16 of a rabbit.

Thus, in a specific exemplary embodiment, the device operation to remove the skin is as described in the closest document, ES2129327.

In order to employ the two gearings 11, 12 at the same time, the inventor has verified that gearings 11, 12 have to be inclined within the same plane. Thus, if extended the axes x, x', which are the imaginary axes that would pass between the toothed wheels 2, 4, 14, 15 until they intersect, define an angle α and said angle has to lie between 20° and 40°. The inventor has verified that for the average-sized rabbit, this angle should be about 26°.

If, for example, we are referring to rabbits, this will allow the device to be used on animals such as average-sized rabbits, or others, such as the Spanish variety of giant rabbit. In other words, by varying the angle, it can be used for average-sized rabbits, from young to adults, or for giant rabbits, whose size would require angle α be changed.

This provides a big advantage with respect to the closest document, since more than one gearing cannot be used because of said problem.

There is also an option to install inclination regulation means for gearings 11, 12, which enables them to be regulated with a single device for various sizes of rabbit.

As a safety measure, it comprises a protector 10 that prevents hands or fingers from accidentally trapped by toothed wheels 2, 4, 14, 15.

Also optional, as shown in the figures, the device may comprise two drive means 3, 13 (motors, for example), one for each gearing 11, 12. Thus, said drive means 3, 13 may be configured so that they are in synchronisation in order for both gearings to rotate at the same rpm. If this is not wanted, then said drive means 3, 13 do not have to be synchronised.

This invention describes a new device for removing the skin from the legs of slaughtered animals. The examples mentioned here do not limit this invention and thus, can have various applications and/or adaptations, all of which are within the scope of the following claims.

## Claims

1. Device for removing the skin from legs of slaughtered animals, of the type comprising a first gearing (11), formed by two conical toothed wheels (2, 4) with helicoidal toothed of variable modulus that comprises at least one drive means (3) **characterised in that** it comprises a second gearing (12), formed by two conical toothed wheels (14, 15) with helicoidal toothed of variable modulus and because said gearings (11, 12) are inclined to each other forming an angle α between them of 20 to 40°, with said angle (α) resulting from a projection of imaginary axes (x, x') that would pass between the toothed wheels (2, 4, 14, 15) until they intersect.

2. Device in according to with claim 1, **characterised in that** it comprises regulation means for gearing (11, 12) inclination.

3. Device in according to claim 1 or 2, **characterised in that** it comprises two drive means (3, 13), one for each gearing (11, 12).

4. Device in according to claim 3, **characterised in that** said drive means (3, 13) are synchronised.
